# EUROPÄISCHE PATENTSCHRIFT

(11) **EP 1 997 654 B1**
(45) Veröffentlichungstag und Bekanntmachung des Hinweises auf die Patenterteilung: **16.05.2012**
(21) Anmeldenummer: 08009163.0
(22) Anmeldetag: 17.05.2008
(51) Int. Cl.: B60G 9/02

(54) **Mähdrescher mit pendelbeweglicher Achse**
Combine harvester with an axle with pivoting movement
Moissonneuse-batteuse doté d'un essieu à mouvement pivotant

(30) Priorität: 31.05.2007 DE 102007025598
(43) Veröffentlichungstag der Anmeldung: 03.12.2008
(73) Patentinhaber: CLAAS Selbstfahrende Erntemaschinen GmbH, 33426 Harsewinkel (DE)
(72) Erfinder: Gersmann, Manfred, 48231 Warendorf (DE); Schröder, Christian, 48231 Warendorf (DE)
(74) Vertreter: Heuer, Wilhelm

(56) Entgegenhaltungen:
- EP-A- 0 997 328
- EP-A- 1 199 195
- DD-A- 88 887
- DE-A1- 10 154 805
- DE-C- 571 191
- GB-A- 1 157 081
- GB-A- 2 406 079
- US-A- 1 416 127
- US-A- 2 032 657
- US-A- 5 322 309
- US-A1- 2004 056 398

## Beschreibung

Die vorliegende Erfindung betrifft einen Mähdrescher mit einem Chassis und einem zwei lenkbare Räder tragenden Achskörper, der um eine in Fahrtrichtung orientierte Pendelachse pendelnd beweglich ist. Traktoren mit einem pendelnd beweglichen Achskörper sind ist aus DD 88 887A bzw. US 5 322 309 bekannt.

Wenn bei einem Fahrzeug mit nicht pendelnd beweglichem Achskörper eines der zwei von dem Achskörper getragenen Räder auf eine Bodenerhebung stößt, muss zum Überwinden der Erhebung der Achskörper unter Beibehaltung seiner Orientierung angehoben werden, und das jeweils andere Rad verliert den Bodenkontakt. Dies ist für eine präzise Lenkung des Fahrzeuges störend. Die Pendelbeweglichkeit des Achskörpers ermöglicht es dem anderen Rad, am Boden zu bleiben, während das eine die Erhebung überwindet, so dass die Lenkbarkeit nicht beeinträchtigt ist. Außerdem reduziert sich die zum Überwinden der Erhebung erforderliche Anhebung des Achskörpers und der von ihm getragenen Last des Chassis.

Dabei ergibt sich jedoch das Problem, dass bei der in US 5 322 209 beschriebenen Achsaufhängung, die zwei von oben nach unten aufeinander zulaufende Lenker verwendet, die jeweils an ihrem oberen Ende an dem Achskörper und am unteren Ende an das Chassis angelenkt sind, ein Momentanpol der Schwenkbewegung unterhalb des Achskörpers liegt. Dies hat zur Folge, dass der obere Bereich des angehobenen Rades sich proportional zu seiner Anhebung auch auf eine Seitenfläche des Chassis zu bewegt. Dadurch verringert sich der Lenkwinkel, der an den Rädern einstellbar ist, ohne dass diese an das Chassis anstoßen. Die Schwenkbeweglichkeit des Achskörpers führt so zu einer Einschränkung des an den Rädern maximal einstellbaren Lenkwinkels, das heißt, je größer die Schwenkbeweglichkeit des Achskörpers ist, um so stärker muss der Lenkwinkel begrenzt sein, um ein Anschlagen der Räder ans Chassis zu vermeiden, und um so schlechter ist folglich die wendigkeit des Fahrzeuges.

Während bei einem Traktor das Chassis zwischen den gelenkten Rädern im Allgemeinen schrank ist und die Schwenkbewegungsfreiheit der Räder nicht beeinträchtigt, ist dies bei Mähdreschern nicht der Fall.

In einem ganz anderen Anwendungsgebiet zeigt EP-A-1199195 eine Hinterradaufhängung eines Gabelstablers mit Chassisteilen zwischen den gelenkten Rädern. Der Achskörper mit der hochliegenden Pendelachse bewegt sich beim Wanken des Gabelstablers in Richtung Kurven außen seite und erhöht so die Stabilität.

Aufgabe der vorliegenden Erfindung ist, einen Mähdrescher mit einem Chassis und einem lenkbare Räder tragenden, um eine in Fahrtrichtung orientierte Pendelachse pendelnd beweglichen Achskörper zu schaffen, der sowohl in der Lage ist, Bodenunebenheiten leicht zu überwinden als auch eine hohe Wendigkeit auf ebenem Grund aufweist.

Die Aufgabe wird erfindungsgemäß gelöst durch ein Fahrzeug mit den Merkmalen des Anspruchs 1.

Diese Anordnung hat zur Folge, dass wenn ein Rad beim Überfahren einer Eerhebung angehoben wird, auch der Abstand des angehobenen Rades von einer gegenüberliegenden Oberfläche des Chassis zunimmt. Wenn also der Einschlagwinkel des Rades so begrenzt ist, dass in der Normallage, in der beide Räder gleiche Höhe haben, ein Anstoßen des Rades gegen die Seitenfläche des Chassis ausgeschlossen ist, so kann es, wenn das Rad angehoben ist, erst recht nicht zum Anstoßen kommen. Was das andere, nicht angehobene Rad angeht, so nähert sich zwar dessen Mittelpunkt einer Längsmittelebene des Fahrzeuges, doch gleichzeitig schwenkt die obere Hälfte des Rades um eine fahrtrichtungsparallele Achse nach außen und wird das Chassis angehoben, so dass auch hier ein Anstoßen vermieden werden kann.

Da der Raum oberhalb des Achskörpers bevorzugt für Nutzvolumen des Fahrzeugs vorgesehen ist, vermeidet man, dort einen Achskörper für die Pendelbewegung anzuordnen. Um diesen Raum anderweitig nutzen zu können, ist die Pendelachse vorzugsweise virtuell.

Einer bevorzugten Ausgestaltung zufolge umfasst das Fahrzeug zwei Lenker, deren jeder mit dem Achskörper und dem Chassis durch ein oberes und ein unteres Gelenk verbunden ist, wobei der Abstand zwischen oberen Gelenken der Lenker kleiner ist als der Abstand zwischen unteren Gelenken derselben.

Der Schnittpunkt der durch die zwei Gelenke jeweils eines Armes verlaufenden Linien stellt einen Momentanpol der Relativbewegung von Achskörper und Chassis gegeneinander dar, und dieser Momentanpol liegt oberhalb des Achskörpers. Dabei ist es ohne Belang, ob die oberen Gelenke am Chassis und die unteren am Achskörper angreifen, oder umgekehrt.

Denkbar ist auch eine Ausgestaltung, bei der der Achskörper in einer in Bezug auf das Chassis pendelbeweglichen Halterung in seiner Längsrichtung verschieblich gehalten ist und eine Kopplungseinrichtung eine Pendelbewegung der Halterung und eine Längsverschiebung des Achskörpers in der Halterung überlagert, um so eine Pendelbewegung des Achskörpers mit einem Momentanpol oberhalb der Räder zu erzeugen, unabhängig davon, ob die Halterung eine reelle Achse aufweist oder nicht, und in welcher Höhe diese ggf. liegt.

Einer einfachen Weiterbildung zufolge umfasst die Kopplungseinrichtung ein mit jeweils einer Verzahnung des Chassis und einer Verzahnung des Achskörpers kämmendes Getriebe.

Einer anderen Weiterbildung zufolge kann die Kopplungseinrichtung einen Sensor zum Erfassen eines Winkels, um den der Achskörper aus seiner Normallage in Bezug auf das Chassis ausgelenkt ist, und ein zwischen dem Chassis und dem Achskörper wirkendes Stellglied zum Verschieben des Schwerpunktes des Achskörpers in Abhängigkeit von dem vom Sensor erfassten Winkel umfassen.

Alternativ kann die Kopplungseinrichtung auch einen zwischen dem Chassis und der Halterung angeordneten, durch eine Pendelbewegung der Halterung betätigten ersten Zylinder und einen mit dem ersten Kolben kommunizierenden zweiten Zylinder umfassen, der zum Längsverschieben des Achskörpers zwischen diesem und der Halterung angebracht ist.

Zwei weitere Räder haben vorzugsweise in Bezug auf das Chassis feste Drehachse. Diese feste Drehachse stabilisiert die Lage des Chassis oberhalb des pendelnd beweglichen Achskörpers.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung eines Mähdreschers als Beispiel für ein erfindungsgemäßes Fahrzeug; und
- Fig. 2 bis 5: jeweils schematische Darstellungen einer Hinterachse des Mähdreschers gemäß verschiedener Ausgestaltungen der Erfindung.

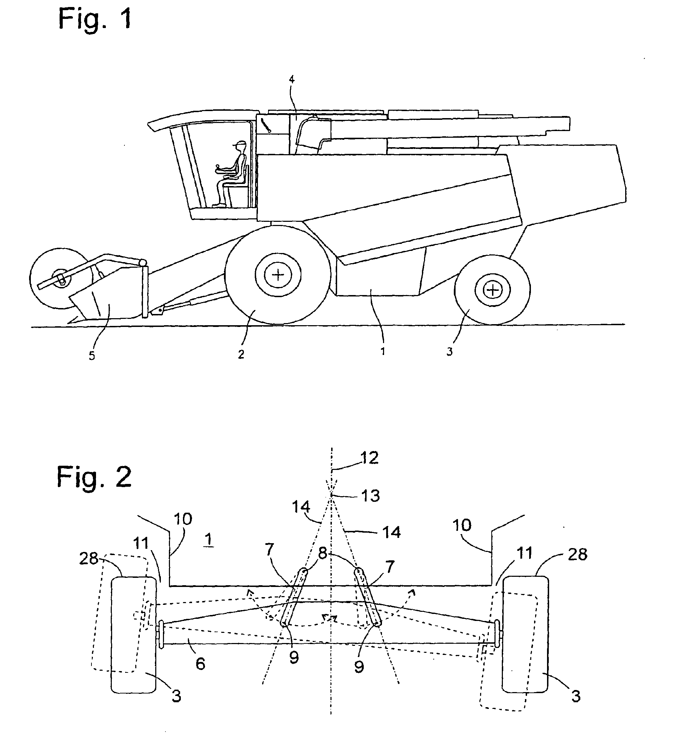

Ein Mähdrescher, wie in Fig. 1 gezeigt, hat ein Chassis 1 mit Vorderrädern 2 und Hinterrädern 3 in unterschiedlicher Größe. Die Vorderräder 2 tragen einen wesentlich größeren Teil des Gewichtes des Mähdreschers als die Hinterräder 3, da sich über ihnen ein Korntank 4 befindet und vor ihnen ein Schneidwerk 5 montiert ist. Um dieses Gewicht zu verteilen, sind die Vorderräder 2 sehr breit und groß, und sie sind mit dem Chassis 1 durch eine starre Achse verbunden. Die im Vergleich deutlich kleineren Hinterräder 3 sind lenkbar.

Fig. 2 zeigt eine schematische Ansicht der Hinterräder 3 und eines sie verbindenden Achskörpers 6 in einer zur Fahrtrichtung parallelen Blickrichtung. In einer mit durchgezogenen Linien dargestellten Normalstellung, auf ebenem Untergrund, befinden sich die zwei Hinterräder 3 auf gleicher Höhe, und der Achskörper 6 ist horizontal ausgerichtet. Der Achskörper 6 trägt das Chassis 1 über zwei Lenker 7, die jeweils an ihren oberen Enden durch Gelenke 8 mit dem Chassis 1 und an ihren unteren Enden durch Gelenke 9 mit dem Achskörper 6 verbunden sind. In der Normalstellung bilden die Gelenke 8, 9 die Ecken eines symmetrischen Trapezes, dessen lange Grundlinie sich zwischen den am Achskörper 6 angreifenden Gelenken 9 erstreckt.

Zwischen den oberen Bereichen der Hinterräder 3 und einer gegenüberliegenden Seitenfläche 10 des Chassis liegt ein Zwischenraum 11. Dieser Zwischenraum 11 ist erforderlich, um beim Lenken die Hinterräder 3 einschlagen zu können. Die Drehachse für die Einschlagbewegung der Räder 3 kann in dem Fachmann vertrauter Weise jeweils ein Achsschenkelbolzen an den Enden des Achskörpers 6 sein, oder der Achskörper 6 ist selbst um eine durch eine Längsmittelebene 12 des Chassis 1 verlaufende Achse drehbar. Egal, welcher Art die Einschlagbewegung ist, sie führt stets zu einer Verengung des Zwischenraumes 11 zwischen dem Chassis 1 und den Rädern 3. Der Einschlagwinkel der Räder 3 darf daher nie so stark sein, dass diese das Chassis 1 berühren.

Es ist leicht nachzuvollziehen, dass nicht nur eine Lenkdrehung des Achskörpers 6 um eine vertikale Achse den Zwischenraum 11 zwischen dem Chassis 1 und den Rädern 3 verengt, sondern dass auch bei einer Pendelbewegung des Achskörpers 6 um eine horizontale, zur Fahrtrichtung parallel durch den Achskörper 6 verlaufende Achse sich der Zwischenraum 11 zwischen dem Chassis 1 und einem der Räder 3 verengen würde. Das heißt, wenn ein solcher Achskörper eine Pendelbewegung ausführte, weil eines seiner Räder eine Bodenerhebung überrollt, würde sich der maximal mögliche Einschlagwinkel der Räder verringern. Mit anderen Worten: Wenn bei horizontal orientiertem Achskörper 6 die Räder 3 maximal eingeschlagen sind, kann es, wenn eines der Räder 3 eine Bodenerhebung überrollt, zu einem Kontakt zwischen diesem Rad und dem Chassis kommen.

Die in der Fig. 2 dargestellte Achsaufhängung vermeidet dieses Problem mit Hilfe der zwei Lenker 7. Wenn eines der Räder 3 eine Bodenerhebung überrollt, führt der Achskörper 6 eine Pendelbewegung aus, durch die er zum Beispiel die in Fig. 2 gestrichelt dargestellte Stellung erreicht. Die Pendelbewegung ist eine Drehbewegung um eine Pendelachse 13, die jeweils am Schnittpunkt von die Gelenke 8, 9 der Lenker 7 verbindenden Linien 14 liegt und dementsprechend mit der Drehung der Lenker 7 beweglich ist. Da die Pendelachse 13 höher liegt als der Scheitelpunkt 28, d.h. der bodenfernste Punkt der Räder 3, bewegt sich das die Erhebung überrollende Rad, links in Fig. 2, in Bezug auf das Chassis 1 nicht nur aufwärts, sondern auch in seitlicher Richtung vom Chassis 1 fort, so dass sich der Zwischenraum 11 zwischen ihm und dem Chassis 1 verbreitert. Es besteht daher keine Gefahr, dass wenn dieses Rad in maximal eingeschlagener Stellung angehoben wird, es mit dem Chassis 1 zusammenstößt. Umgekehrt bewegt sich das nicht angehobene Rad, das rechte in Fig. 2, auf das Chassis 1 zu; da aber gleichzeitig das Chassis 1 angehoben wird, vergrößert sich auch für dieses Rad der zum Einschlagen verfügbare Platz, und es besteht keine Gefahr eines Zusammenstoßes zwischen Rad und Chassis.

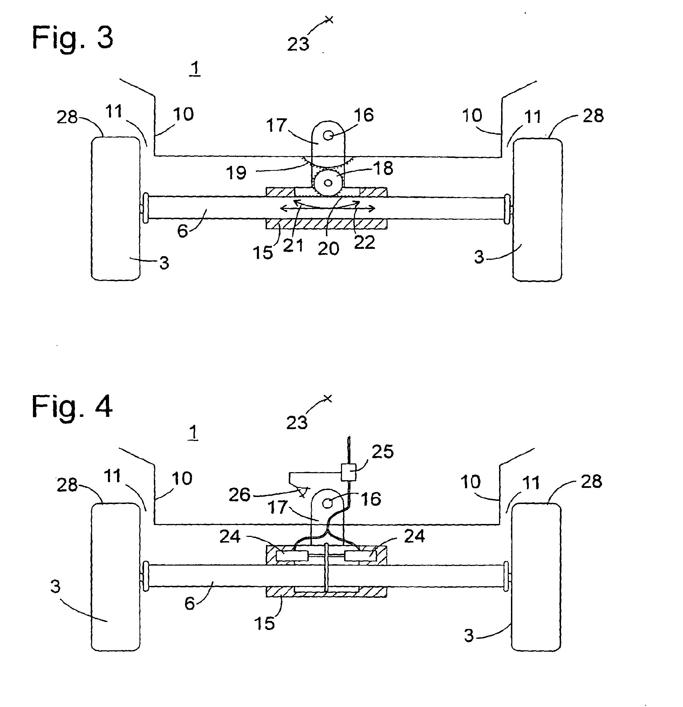

Eine vergleichbare Wirkung wie mit dem Aufbau der Fig. 2 ist durch diverse andere Konstruktionen erzielbar. So zeigt Fig. 3 schematisch eine Achsaufhängung mit einer den Achskörper 6 aufnehmenden Hülse 15, die um eine zur Fahrtrichtung parallele, in Bezug auf das Chassis 1 feste Pendelachse 16 in Richtung eines Pfeils 21 schwenkbar an das Chassis 1 angelenkt ist. An einem starr mit der Hülse 15 verbundenen und an die Pendelachse 16 angelenkten Arm 17 ist ein Zahnrad 18 aufgehängt, das einerseits mit einer kreissektorförmigen Verzahnung 19 des Chassis 1 und andererseits mit einer Zahnstange 20 des Achskörpers 6 kämmt. Das Zahnrad 18 treibt so eine an eine Pendelbewegung der Hülse 15 um die Achse 16 gekoppelte Verschiebung des Achskörpers 6 in Richtung eines Pfeils 22 an. Die Überlagerung von Drehung und Translation des Achskörpers 6 entspricht einer Drehung um eine virtuelle Pendelachse 23, die wie die Pendelachse 13 der Konstruktion von Fig. 2 oberhalb der Scheitelpunkte 28 der Räder 3 liegt und beweglich ist.

Fig. 4 zeigt eine dritte Ausgestaltung der Erfindung, bei der ebenfalls der die Hinterräder 3 tragende Achskörper 6 in einer um eine am Chassis 1 feste Pendelachse 16 schwenkbaren Hülse 15 verschiebbar ist. Eine Verschiebung des Achskörpers 6 in der Hülse 15 erfolgt hier mit Hilfe von pneumatischen oder hydraulischen Zylindern 24, die mit einer in einem herkömmlichen Mähdrescher meist vorhandenen Quelle und Senke für ein Druckfluid über ein Ventil 25 gekoppelt sind. Der Zu- und Abfluss von Druckfluid über das Ventil 25 ist gesteuert anhand eines die Pendelstellung der Hülse 15 erfassenden Sensors 26. Ein Vorteil dieser Ausgestaltung ist, dass durch eine geeignete Ansteuerung des Ventils 25 jeder beliebige Zusammenhang zwischen der Pendelstellung der Hülse 15 und einer entsprechenden Verschiebung des Achskörpers 6 realisierbar ist.

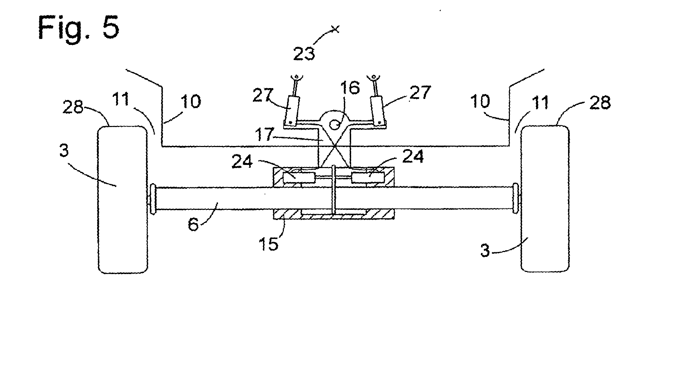

Fig. 5 zeigt eine rein hydraulisch arbeitende Ausgestaltung. Die Hülse 15 und die Zylinder 24 sind dieselben wie in der Ausgestaltung der Fig. 4, doch bekommen die Zylinder 24 Hydraulikfluid nicht ventilgeregelt von einer Quelle des Mähdreschers, sondern sind gekoppelt an Zylinder 27, die jeweils zwischen die Hülse 15 tragenden Arm 17 und einem Fixpunkt des Chassis 1 angeordnet sind. So wird zum Beispiel bei einer Pendelbewegung des Achskörpers 6 im Uhrzeigersinn, wie in Fig. 2 dargestellt, der linke der beiden Zylinder 27 in Fig. 5 gestaucht, und Hydraulikfluid aus diesem strömt über zu dem rechten Zylinder 24, wodurch der Achskörper 6 nach links verschoben wird. Wiederum überlagern sich die Pendelbewegung der Hülse 15 um die chassisfeste Pendelachse 16 und die Verschiebung des Achskörpers 6 in der Hülse 15 zu einer Pendelbewegung des Achskörpers 6 um eine virtuelle Pendelachse 23, die höher liegt als die Scheitelpunkte 28 der Räder 3.

### Bezugszeichen

- 1.: Chassis
- 2.: Vorderrad
- 3.: Hinterrad
- 4.: Korntank
- 5.: Schneidwerk
- 6.: Achskörper
- 7.: Lenker
- 8.: Gelenk
- 9.: Gelenk
- 10.: Seitenfläche
- 11.: Zwischenraum
- 12.: Längsmittelebene
- 13.: Pendelachse
- 14.: Linie
- 15.: Hülse
- 16.: Pendelachse
- 17.: Arm
- 18.: Zahnrad
- 19.: Verzahnung
- 20.: Verzahnung
- 21.: Pfeil
- 22.: Pfeil
- 23.: Pendelachse
- 24.: Zylinder
- 25.: Ventil
- 26.: Sensor
- 27.: Zylinder
- 28.: Scheitelpunkt

## Patentansprüche

1. Landwirtschaftliches Fahrzeug mit einem Chassis (1) und einem zwei lenkbare Räder (3) tragenden, um eine in Fahrtrichtung orientierte Pendelachse (13, 23) pendelnd bewegbaren Achskörper (6), bei dem die Pendelachse (13, 23) auf wenigstens einem Teil der Pendelbewegung höher liegt als ein Scheitelpunkt (28) der Räder(3), **dadurch gekennzeichnet, dass** das Fahrzeug ein Mähdrescher ist und dass durch eine Anhebung eines der Räder (3) der Abstand des angehobenen Rades (3) von einer gegenüberliegenden Oberfläche des Chassis (1) erhöht ist.

2. Landwirtschaftliches Fahrzeug nach Anspruch 1, **dadurch gekennzeichnet, dass** die Pendelachse (13, 23) virtuell ist.

3. Landwirtschaftliches Fahrzeug nach Anspruch 1 oder 2, **gekennzeichnet durch** zwei Lenker (7), deren jeder mit dem Achskörper (6) und dem Chassis (1) **durch** ein oberes und ein unteres Gelenk (8; 9) verbunden ist, wobei der Abstand zwischen oberen Gelenken (8) der Lenker (7) kleiner ist als der Abstand zwischen unteren Gelenken (9) derselben.

4. Landwirtschaftliches Fahrzeug nach einem der vorhergehenden Ansprüche, **dadurch gekennzeichnet, dass** der Achskörper (6) in einer in Bezug auf das Chassis (1) pendelbeweglichen Halterung (15) in seiner Längsrichtung verschieblich gehalten ist und dass eine Kopplungseinrichtung (17, 18, 19, 20; 24, 25, 26; 24, 27) eine Pendelbewegung der Halterung (15) und eine Längsverschiebung des Achskörpers (6) in der Halterung (15) überlagert.

5. Landwirtschaftliches Fahrzeug nach Anspruch 4, **dadurch gekennzeichnet, dass** die Kopplungseinrichtung (17, 18, 19, 20) ein mit jeweils einer Verzahnung (19) des Chassis (1) und einer Verzahnung (20) des Achskörpers (6) kämmendes Getriebe (18) umfasst.

6. Landwirtschaftliches Fahrzeug nach Anspruch 4, **dadurch gekennzeichnet, dass** die Kopplungseinrichtung (24, 25, 26) einen Sensor (26) zum Erfassen eines Winkels, um den die Halterung (15) aus einer Normallage ausgelenkt ist, und ein zwischen der Halterung (15) und dem Achskörper (6) wirkendes Stellglied (24) zum Längsverschieben des Achskörpers (6) in Abhängigkeit von dem vom Sensor (26) erfassten Winkel umfasst.

7. Landwirtschaftliches Fahrzeug nach Anspruch 4, **dadurch gekennzeichnet, dass** die Kopplungseinrichtung (24, 27) einen zwischen dem Chassis (1) und der Halterung (15) angeordneten, durch eine Pendelbewegung der Halterung (15) betätigten ersten Zylinder (27) und einen mit dem ersten Zylinder (27) kommunizierenden, zwischen der Halterung (15) und dem Achskörper (6) angeordneten zweiten Zylinder (24) umfasst.

8. Landwirtschaftliches Fahrzeug nach einem der vorhergehenden Ansprüche, **dadurch gekennzeichnet, dass** zwei weitere Räder (2) eine in Bezug auf das Chassis (1) feste Drehachse haben.

## Claims

1. Agricultural vehicle having a chassis (1) and having an axle (6) which carries two steerable wheels (3) and which is movable by tilting on an axis of tilt (13, 23) oriented in the direction of travel, in which the axis of tilt (13, 23) is higher than a crown (28) of the wheels (3) in at least part of the tilting movement, **characterised in that** the vehicle is a combine harvester and **in that**, by the raising of one of the wheels (3), the distance between the raised wheel (3) and a surface of the chassis (1) which is situated opposite is increased.

2. Agricultural vehicle according to claim 1, **characterised in that** the axis of tilt (13, 23) is a virtual axis.

3. Agricultural vehicle according to claim 1 or 2, **characterised by** two links (7), each of which is connected to the axle (6) and the chassis (1) by an upper and a lower joint (8, 9), the distance between the upper joints (8) of the links (7) being shorter than the distance between the lower joints (9) thereof.

4. Agricultural vehicle according to one of the preceding claims, **characterised in that** the axle (6) is held to be displaceable in its longitudinal direction in a mounting (15) able to move by tilting relative to the chassis (1) and **in that** a coupling arrangement (17, 18, 19, 20; 24, 25, 26; 24, 27) superimposes a tilting movement of the mounting (15) and a longitudinal displacement of the axle (6) in the mounting (15).

5. Agricultural vehicle according to claim 4, **characterised in that** the coupling arrangement (17, 18, 19, 20) comprises a gear (18) which meshes with a set of teeth (19) on the chassis (1) and a set of teeth (20) on the axle (6).

6. Agricultural vehicle according to claim 4, **characterised in that** the coupling arrangement (24, 25, 26) comprises a sensor (26) for sensing an angle through which the mounting (15) is deflected from a normal position, and a positioner (24) acting between the mounting (15) and the axle (6) to displace the axle (6) longitudinally as a function of the angle sensed by the sensor (26).

7. Agricultural vehicle according to claim 4, **characterised in that** the coupling arrangement (24, 27) comprises a first cylinder (27) which is arranged between the chassis (1) and the mounting (15) and which is actuated by a tilting movement of the mounting (15), and a second cylinder (24) which communicates with the first cylinder (27) and which is arranged between the mounting (15) and the axle (6).

8. Agricultural vehicle according to one of the preceding claims, **characterised in that** two further wheels (2) have a fixed axis of rotation relative to the chassis (1).

## Revendications

1. Engin agricole ayant un châssis (1) et ayant un essieu (6) qui porte deux roues directrices (3) et qui est mobile par basculement sur un axe de basculement (13, 23) orienté dans le sens de roulage, dans quoi l'axe de basculement (13, 23) est plus haut qu'une couronne (28) des roues (3) dans au moins une partie du mouvement de basculement, **caractérisé en ce que** l'engin est une moissonneuse batteuse et **en ce que**, par le relèvement de l'une des roues (3), la distance entre la roue relevée (3) et une surface du châssis (1) qui est située en face est augmentée.

2. Engin agricole selon la revendication 1, **caractérisé en ce que** l'axe de basculement (13, 23) est un axe virtuel.

3. Engin agricole selon la revendication 1 ou 2, **caractérisé par** deux biellettes (7), chacune d'elles étant connectée à l'essieu (6) et au châssis (1) par une articulation supérieure et une articulation inférieure (8, 9), la distance entre les articulations supérieures (8) des biellettes (7) étant plus courte que la distance entre les articulations inférieures (9) de ces dernières.

4. Engin agricole selon l'une des revendications précédentes, **caractérisé en ce que** l'essieu (6) est naintenu pour être déplaçable dans son sens longitudinal dans un support (15) pouvant se mouvoir par basculement relativement au châssis (1) et **en ce qu'**un dispositif d'accouplement (17, 18, 19, 20; 24, 25, 26; 24, 27) superpose un mouvement de basculement du support (15) et un déplacement longitudinal de l'essieu (6) dans le support (15).

5. Engin agricole selon la revendication 4, **caractérisé en ce que** le dispositif d'accouplement (17, 18, 19, 20) comprend un engrenage (18) qui s'engrène avec un jeu de dents (19) sur le châssis (1) et un jeu de dents (20) sur l'essieu (6).

6. Engin agricole selon la revendication 4, **caractérisé en ce que** le dispositif d'accouplement (24, 25, 26) comprend un capteur (26) pour capter un angle duquel le support (15) est dévié d'une position normale, et un positionneur (24) agissant entre le support (15) et l'essieu (6) pour déplacer l'essieu (6) longitudinalement en fonction de l'angle capté par le capteur (26).

7. Engin agricole selon la revendication 4, **caractérisé en ce que** le dispositif d'accouplement (24, 27) comprend un premier vérin (27) qui est disposé entre le châssis (1) et le support (15) et qui est actionné par un mouvement de basculement du support (15), et un second vérin (24) qui communique avec le premier vérin (27) et qui est disposé entre le support (15) et l'essieu (6).

8. Engin agricole selon l'une des revendications précédentes, **caractérisé en ce que** deux autres roues (2) ont un axe de rotation fixe relativement au châssis (1).
